# EUROPÄISCHE PATENTSCHRIFT

(11) **EP 0 902 210 B1**
(45) Veröffentlichungstag und Bekanntmachung des Hinweises auf die Patenterteilung: **15.01.2003**
(21) Anmeldenummer: 98117419.6
(22) Anmeldetag: 15.09.1998
(51) Int. Cl.: F16D 69/04, F16D 65/092

(54) **Belagträger für einen Scheibenbremsbelag**
Lining carrier for a disc brake pad
Plaquette support pour garniture de frein à disque

(30) Priorität: 15.09.1997 DE 19740597
(43) Veröffentlichungstag der Anmeldung: 17.03.1999
(73) Patentinhaber: Goldbach Automobile Consulting GmbH, 61350 Bad Homburg v.d.H. (DE)
(72) Erfinder: Goldbach, Dieter O. Dipl.-Ing., 61350 Bad Homburg (DE); Spuckti, Michael Stephan Dipl.-Ing., 61279 Grävenwiesbach (DE)
(74) Vertreter: Weiss, Peter, Dr. rer. nat.

(56) Entgegenhaltungen:
- DE-A- 2 106 290
- DE-C- 4 220 630
- GB-A- 2 303 891
- US-A- 3 767 018
- US-A- 4 146 118
- US-A- 4 605 104
- US-A- 5 124 118
- US-A- 5 255 762
- US-A- 5 332 067
- US-A- 5 535 860
- US-A- 5 558 186

## Beschreibung

Die Erfindung betrifft eine Scheibenbremse mit einem Belagträger und einem Reibbelag.

Derartige Scheibenbremsen sind in vielfältiger Form und Ausführung bekannt. Verwiesen wird bspw. auf die EP-A 0 373 333 oder auch die DE 41 04 812 A1. Bei derartigen Scheibenbremsen besteht der Belagträger aus Stahl. Für den Reibbelag gibt es eine Vielzahl von Rezepturen, die vor allem den Bremsverschleiss minimieren und die Bremswirkung verbessern sollen.

Aus der US-A-5 255 762 ist ferner eine Backenbremse bekannt, bei der im Reibbelag eine Mutter sitzt. Zur Verbindung des Reibbelages mit dem Belagträger wird in die Mutter ein Schraubenbolzen eingeschraubt, welcher eine entsprechende Öffnung in dem Belagträger durchsetzt.

Eine Verbindung zwischen Reibbelag und Belagträger durch Nieten wird bspw. in der DE 21 06 290 A, US-A-5 558 186 und US-A 3 767 018 gezeigt.

Der vorliegenden Erfindung liegt die Aufgabe zu Grunde einen Scheibenbremse zu entwickeln, deren Herstellung vereinfacht und deren Qualität insgesamt verbessert ist. Zudem sollen die Verbindung zwischen Reibbelag und Belagträger wesentlich verbessert werden.

Zur Lösung dieser Aufgabe führt, dass ein Schweissbolzen mit beispielsweise einem Aussengewinde in dem Reibbelag sitzt und sein Kopf mit dem Belagträger verschweisst ist.

Der Reibbelag wird dann auf den Belagträger aufgepresst, so dass das Reibbelagmaterial in das Aussengewinde des Schweissbolzens einfliesst und auf diese Art und Weise der Reibbelag mit dem Belagträger verankert wird.

Als Schweissbolzen bieten sich solche aus Messing an, da dieses Material über eine ausreichende Festigkeit verfügt, die Bremsscheiben jedoch nach Abtragen des Reibbelages bis auf die Höhe des Schweissbolzens nicht beschädigt, sich gut vernieten lässt und auch auf Titan schweissbar ist. Alernativ können auch andere Werkstoffe eingesetzt werden, die in erster Linie die Scheibe nicht beschädigen und trotzdem die nötige Festigkeit besitzen.

Falls gewünscht, kann nach wie vor zwischen Belagträger und Reibbelag eine Klebe- und/oder Underlayer-Schicht vorgesehen werden. Dies muss aber nicht sein.

Ferner ist im Rahmen der Erfindung vorgesehen, dass um die Verbindung zwischen Belagträger und Reibbelag in den Belagträger eine Vertiefung eingeformt ist, in welche auch Werkstoff des Reibbelages eingedrückt wird. Hierdurch ergibt sich eine zusätzlich formschlüssige Verbindung, so dass auf den Reibbelag einwirkende Scherkräfte aufgenommen werden.

Bei der Verbindung mittels des oben erwähnten Schweissbolzens ist eine Wiederverwendbarkeit des Belagträgers nicht ausgeschlossen. Entweder können die Schweissbolzen entfernt oder aber der Reibbelag zerschnitten und einzelne Teile von den Schweissbolzen abgedreht werden. Hier sind noch weitere Möglichkeiten denkbar, die von der Erfindung umfasst sein sollen.

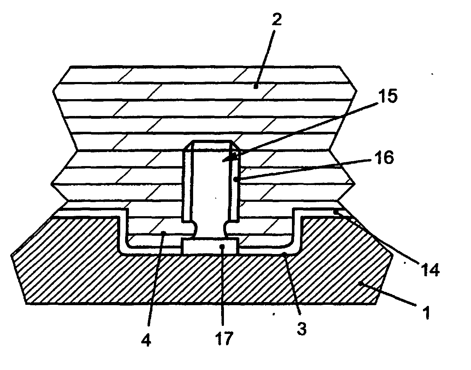

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in ihrer einzigen Figur einen teilweise dargestellte Querschnitte durch eine erfindungsgemässe Scheibenbremse.

Die Scheibenbremse weist einen Belagträger 1 auf, der einseitig von einem Reibbelag 2 belegt ist. Dabei kann zur Verbindung zwischen Reibbelag 2 und Belagträger 1 noch eine Klebe- oder Underlayer-Schichten 14 angeordnet sein.

Im bevorzugten Ausführungsbeispiel ist in den Belagträger 1 eine Vertiefung 3 eingeformt, die eine beliebige geometrische Ausgestaltung aufweisen kann. Die Vertiefung 3 nimmt Werkstoff des Reibbelags 2 auf, so dass hier eine entsprechende Erhöhung 4 auf dem Reibbelag 2 gebildet ist.

Ein Schweissbolzen 15 mit einem Aussengewinde 16 und einem Bolzenkopf 17 wird auf den Belagträger 1 aufgeschweisst. Danach wird der Reibbelag 2 aufgepresst, wobei er in das Aussengewinde 16 des Schweissbolzen 15 einfliesst und so mit diesem verbunden wird. Eine zusätzliche optionale Verbindung geschieht noch durch die Klebeschicht 14.

## Patentansprüche

1. Scheibenbremse mit einem Belagträger (1) und einem Reibbelag (2),
**dadurch gekennzeichnet,**
**dass** ein Schweissbolzen (15) mit beispielsweise einem Aussengewinde (16) in dem Reibbelag (2) sitzt und sein Kopf (17) mit dem Belagträger (1) verschweisst ist.

2. Scheibenbremse nach Anspruch 1, **dadurch gekennzeichnet, dass** um den Schweissbolzen (15) in den Belagträger (1) eine Vertiefung (3) eingeformt ist, welche Werkstoff des Reibbelags (2) aufnimmt.

## Claims

1. Disc brake, having a lining carrier (1) and a friction lining (2), **characterised in that** a welded bolt (15), having an external thread (16) for example, rests in the friction lining (2), and its head (17) is welded to the lining carrier (1).

2. Disc brake according to claim 1, **characterised in that** a recess (3) is provided in the lining carrier (1) around the welded bolt (15), which recess accommodates material of the friction lining (2).

## Revendications

1. Frein à disque comportant un support de garniture (1) et une garniture de friction (2),
**caractérisé par**
un goujon soudé (15) ayant par exemple un filetage extérieur (16) qui se loge dans la garniture de frein (2) et dont la tête (17) est vissée au support de garniture (1).

2. Frein à disque selon la revendication 1,
**caractérisé par**
une cavité (3) réalisée dans le support de garniture (1) autour du goujon soudé (15) pour recevoir de la matière de la garniture de frein (2).
